# EUROPEAN PATENT APPLICATION

(11) **EP 0 742 362 A2**
(43) Date of publication of application: **13.11.1996**
(21) Application number: 96107291.5
(22) Date of filing: 08.05.1996
(51) Int. Cl.: F02D 41/38

(54) **Fuel injection control system applicable upon starting diesel engine**

(30) Priority: 12.05.1995 JP 138564/95; 12.05.1995 JP 138566/95
(71) Applicant: ISUZU MOTORS LIMITED, Shinagawa-ku, Tokyo (JP)
(72) Inventor: Sanada, Masanori, c/o Isuzu Motors Ltd., Fujiswawa-shi, Kanagawa (JP); Takeuchi, Makoto, c/o Isuzu Motors Ltd., Fujiswawa-shi, Kanagawa (JP); Inoue, Shinichi, c/o Isuzu Motors Ltd., Fujiswawa-shi, Kanagawa (JP); Uchiyama, Tadashi, c/o Isuzu Motors Ltd., Fujiswawa-shi, Kanagawa (JP); Makimoto, Takashi, c/o Isuzu Motors Ltd., Fujiswawa-shi, Kanagawa (JP); Imai, Junichi, c/o Isuzu Motors Ltd., Fujiswawa-shi, Kanagawa (JP); Kuroda, Kouichi, c/o Isuzu Motors Ltd., Fujiswawa-shi, Kanagawa (JP)
(74) Representative: Roth, Ronald, Dipl.-Ing.

(57) **Abstract**

A map out of the following two maps (A) and (B) is provided within a controller for a diesel engine having an electronically controlled fuel injection device.
(A) An injection quantity correction map for correcting, on the basis of the engine coolant temperature upon starting, a curve of 0 % in accelerator pedal depression in the fuel injection control map applicable after starting engine to provide the after-starting mode, with consideration of not causing rough idling when the mode is changed from the starting mode to the after-starting mode
(B) A start mode removing revolution map wherein the start mode-removing revolution is determined so as not to cause rough idling upon changing the mode from the start mode to the after-start mode, corresponding to the engine coolant temperature.

Rough idling can be prevented by applying an above-said map.

## Description

### Technical Field

This invention relates to a fuel injection control system applicable upon starting a diesel engine, which prevents rough idling upon starting of a diesel engine wherein fuel injection is electronically controlled.

### Background Art

In a vehicle having a diesel engine in which fuel injection is electronically controlled, fuel injection quantity and fuel injection timing are controlled by a controller mainly comprising a computer. The fuel injection quantity is controlled according to various control maps previously installed in the computer.

The control maps are roughly grouped into two types: one being a fuel injection quantity control map to be applied upon start of engine (starting mode); and the other being a fuel injection quantity control map to be applied after start of engine (after-starting mode). Contents of the maps are properly determined depending upon what performance is required upon start of engine or what driving properties are required.

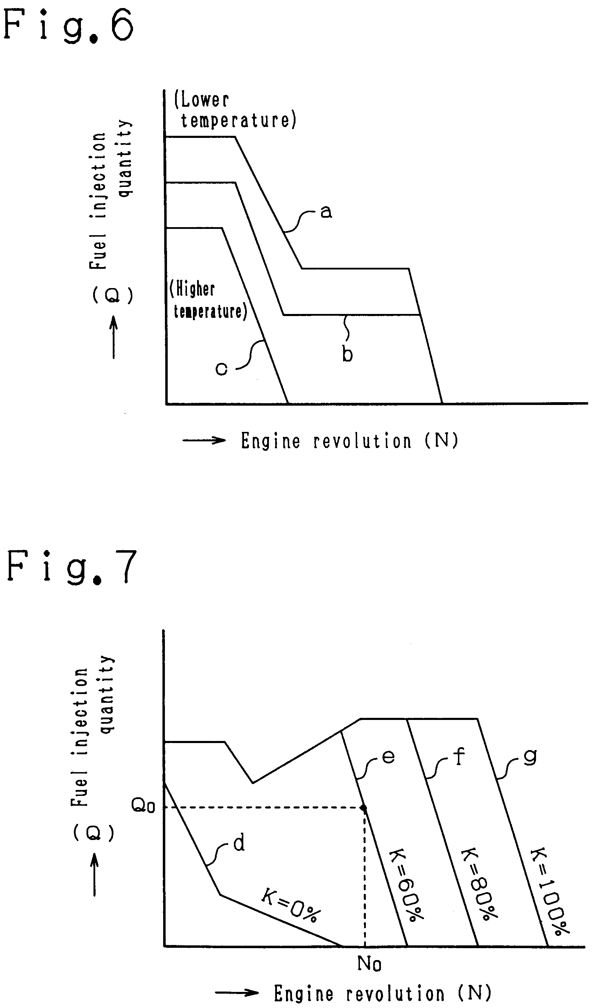

Fig. 6 shows one example of the start mode fuel injection quantity control map. Engine revolution (N) is plotted as abscissa and starting fuel injection quantity (Q) as ordinate. According to this map, fuel injection quantity (Q) when the engine temperature upon start is at a lower level is larger than that when at a higher level. Of the three curves a, b and c, the curve a is applied when the temperature is at the lowest level of the three, the curve b is applied when the temperature is higher than that, and the curve c is applied when the temperature is at the highest level of the three.

Fig. 7 shows one example of the after-start mode fuel injection quantity control map. K represents accelerator pedal depression. Fuel injection quantity (Q) is determined by the engine revolution (N) and the accelerator pedal depression (K) at that time. Curve d is a curve to be applied for an accelerator pedal depression of 0 % (that is, when the accelerator pedal is not depressed at all), and curve g is a curve to be applied for an accelerator pedal depression of 100 % (that is, when the accelerator pedal is fully depressed). Curves e and f are curves to be applied, respectively, for accelerator pedal depression of 60 % and 80 %.

For example, when engine revolution is N_{O} and accelerator pedal depression is 60 %, the injection quantity is determined to be Q_{O}, and the injection system is controlled to inject fuel in a quantity of Q_{O}.

By the way, in the start mode, cranking starts when the starter is switched ON, fuel is injected according to the start mode fuel injection control map shown by Fig. 6, and the engine revolution increases. When the revolution exceeds the previously determined start mode-removing revolution, N_{A} , and the starter is switched OFF, the control is shifted to the after-start mode.

The start mode-removing revolution, N_{A} , is usually determined at a level slightly lower than idling revolution of the engine. The reason why if the start mode-removing revolution of N _{A} is set at a high level, fuel is injected in a quantity more than is necessary since fuel is injected in the start mode till the revolution reaches the high level N _{A} even after the engine has been fully warmed up. Thus, there arise problems of bad fuel consumption and driver's unpleasant vibrating feeling. For example, when the idling revolution N _{ID} = 700 rpm, the start mode-removing revolution, N_{A} , is set to be 550 rpm.

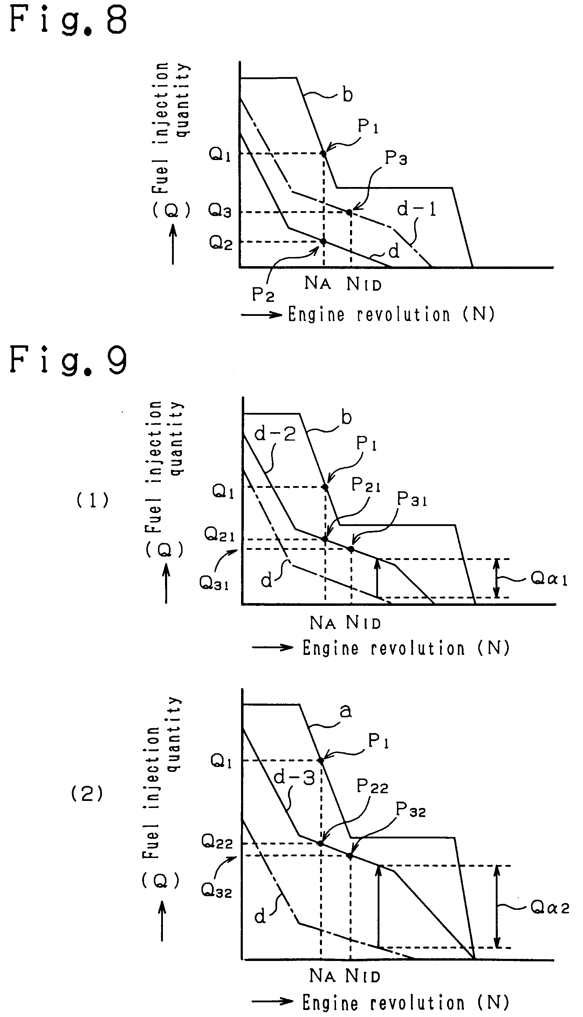

Fig. 8 illustrates the change in fuel injection quantity when the mode shifts from the start mode to the after-start mode. Curve b is the curve b in Fig. 6 and, in the start mode, the fuel injection quantity is supposedly determined on the basis of this curve b. Curve d is the curve d in Fig. 7 and, when the mode shifts to the after-start mode without depressing the accelerator pedal, the fuel injection quantity is first determined on the basis of this curve d.

Working point on the curve b when the engine revolution reaches the start mode-removing revolution of N_{A} is P₁, and the fuel injection quantity at the point is Q₁. When the revolution exceeds the start mode-removing revolution of N_{A} and the strater is switched OFF, the curve to be employed is changed to curve d. Thus, fuel injection quantity at this stage is determined to be Q₂ corresponding to point P₂ on the curve d. The engine revolution must be increased to the idling revolution of N_{ID}, and the increase in the idling revolution is attained by so-called idling learning control of the controller.

The idling learning control is a control of changing the fuel injection quantity so as to attain the idling revolution N_{ID} with detecting the engine revolution and with the accelerator pedal depression being 0 %. According to this control, the working point starts from point P₂ immediately after the curve b is changed to curve d, and finally settles down at point P₃ giving an injection quantity of Q₃ which can give an idling revolution of N_{ID} without any depression of an accelerator pedal. It is curve d-1 that is a curve for 0 % in accelerator pedal depression which is so corrected as to have thereon the point P₃. In other words, the controller itself corrects the curve d for 0 % in accelerator pedal depression to the curve d-1.

The curve d for 0 % in accelerator pedal depression in the after-start mode fuel injection control map is designed so as to provide a suitable fuel injection quantity where the engine is idling under after-start mode (the engine being warmed up). Hence, when the engine coolant temperature is at a low level, change in fuel injection quantity is seriously large upon the mode being changed from the start mode to the after-start mode and during the period till the engine revolution settles down to the idling revolution. Thus, there arises rough idling that the engine revolution is seriously changed and not readily settles down to the idling revolution.

On the other hand, as the start mode-removing revolution of N _{A} , only one N _{A} has so far been set with considering that the control mode be smoothly changed to the after-start mode when the engine is started under the standard circumstances (atmospheric pressure: 760 mmHg; temperature: 25°C). Therefore, when the engine is started under circumstances much different from the standard circumstances (for example, the engine coolant temperature being at an extremely low level), fuel injection quantity upon mode change seriously fluctuates and, therefore, engine revolution also seriously fluctuates, thus not readily settling down to the idling revolution and causing rough idling.

Fig. 5 is a graph showing change in engine revolution where rough idling arises. Cranking is started at a time of t_{O} and, when the engine revolution reaches the start mode-removing revolution of N_{A} and the starter is switched OFF, the mode is changed to the after-start mode. Then, the engine revolution reaches the idling revolution of N_{ID}. However, when the engine coolant temperature is at an extremely low level, the engine suffers serious fluctuation in revolution to cause rough idling. Such rough idling gives a driver unpleasant feeling.

The mechanism how rough idling takes place is described in more detail by reference to Fig. 8. Since curve d is designed so as to provide a proper fuel injection quantity where the engine is under idling in a warmed-up state, the quantity is less than is required before the engine is warmed up. Thus, in Fig. 8, too, the curve d is at a low position.

When the engine revolution reaches the start mode-removing revolution of N_{A} and the mode is changed to the after-start mode, working point determining the fuel injection quantity shifts from P₁ to P₂, the fuel injection quantity decreasing from Q₁ to Q₂. This decreasing change (Q₁ - Q₂) becomes more as the gap between the start mode curve (curve b) and the after-start mode curve for an accelerator pedal depression of 0 % (curve d) at the start mode-removing revolution of N_{A} becomes wider. In Fig. 8, curve b in Fig. 6 is employed as the start mode curve but, when the temperature is lower, curve a in Fig. 6 is employed, thus, the gap becoming wider.

After the mode is changed to the after-start mode, the controller controls the fuel injection to realise the idling revolution of N_{ID} through idling learning control. However, since the engine is not still warmed up at this stage, the fuel injection quantity must be increased. A large change in fuel injection quantity would cause a large change in engine revolution and, as shown in Fig. 5, several large changes would be repeated before reaching the idling revolution of N_{ID} corresponding to the working point of P₃.

### Disclosure of Invention

The first object of the invention is to correct the curve for an accelerator pedal depression of 0 % in the after-start mode fuel injection quantity control map, on the basis of the engine coolant temperature, with consideration of not causing rough idling when the mode is changed from the start mode to the after-start mode.

The second object of the present invention is to determine the start mode-removing revolution to be at a level not causing rough idling when the mode is changed from the start mode to the after-start mode, corresponding to the engine coolant temperature.

To attain the first object, there is provided a fuel injection control system applicable upon starting a diesel engine having an injection pump, an engine revolution sensor, an engine coolant temperature sensor and a controller for changing the mode of control of the fuel injection by said injection pump from a starting mode to an after-start mode when the engine revolution exceeds start mode-removing level; in which said controller has a means for correcting, on the basis of the engine coolant temperature upon starting, a curve of 0 % in accelerator pedal depression in the fuel injection control map applicable after starting engine to provide the after-start mode. An example of the said means is an injection quantity correction map.

To attain the second object, there is provided a fuel injection control system applicable upon starting a diesel engine having an injection pump, a starter switch, an engine revolution sensor, an engine coolant temperature sensor and a controller for changing the mode of control of the fuel injection by said injection pump from a start mode to an after-start mode when the engine revolution exceeds start mode-removing level and the starter is switched OFF; in which said controller has a means for determining said start mode-removing revolution to be at a level not causing rough idling corresponding to the engine coolant temperature upon starting the engine. An example of the said means is a start mode-removing revolution map.

### Brief Description of the Drawings

Fig. 1 is a flow chart for illustrating the operation of the first example of the present invention for controlling start mode fuel injection of a diesel engine.

Fig. 2 is a block diagram showing the system of the present invention for controlling start mode fuel injection of a diesel engine.

Fig. 3 is a graph showing fuel injection correction quantity map.

Fig. 4 is a graph showing change in the engine revolution under the first example of the present invention when a diesel engine is started.

Fig. 5 is a graph showing change in the engine revolution when rough idling takes place.

Fig. 6 is a graph showing a start mode fuel injection quantity control map.

Fig. 7 is a graph showing an after-start mode fuel injection quantity control map.

Fig. 8 is a graph showing change in conventional fuel injection quantity upon changing the mode from the start mode to the after-start mode.

Fig. 9 is a garph showing change in fuel injection quantity of the first example of the present invention upon changing the mode from the start mode to the after-start mode.

Fig. 10 is a flow chart for illustrating the operation of the second example of present invention for controlling start mode fuel injection of a diesel engine.

Fig. 11 is a graph showing start mode-removing revolution map.

Fig. 12 is a graph showing change in the engine revolution under the second example of the present invention when a diesel engine is started.

Fig. 13 is a graph showing change in fuel injection quantity of the second example of the present invention upon changing the mode from the start mode to the after-start mode.

### Best Mode of Carrying Out of the Invention

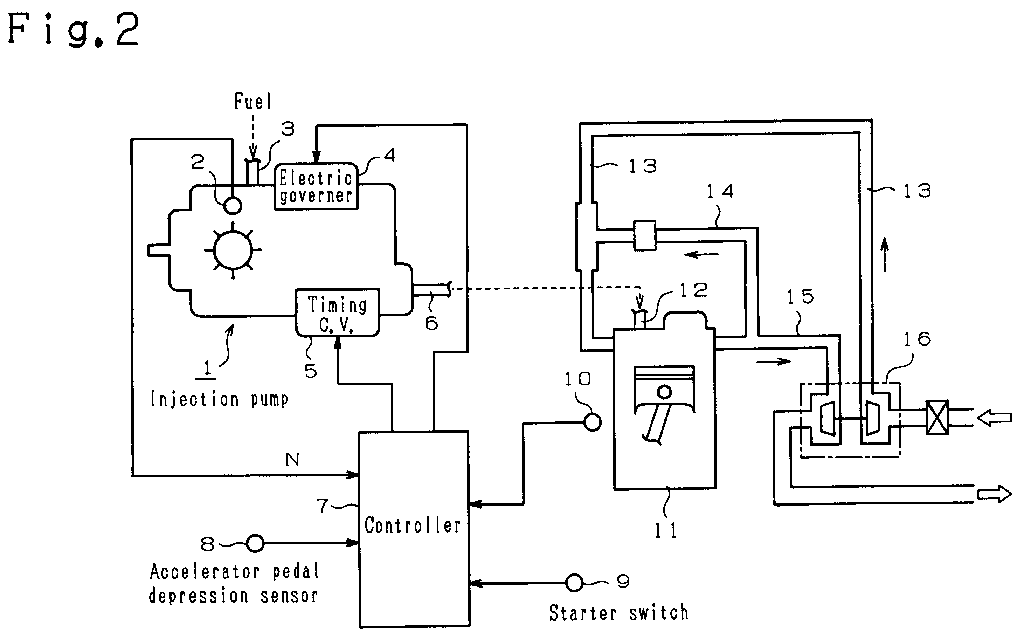

An example of the present invention is now described by reference to drawings. Fig. 2 is a block diagram showing a start mode fuel injection control system of the present invention for diesel engine. In Fig. 2, numeral 1 designates a fuel injection pump, 2 an engine revolution sensor, 3 a fuel pipe, 4 an electric governer, 5 a timing control valve, 6 a fuel pump, 7 a controller, 8 an accelerator pedal depression sensor, 9 a starter switch, 10 an engine coolant temperature sensor, 11 a diesel engine, 12 an injection nozzle, 13 an intake pipe, 14 an exhaust gas returning pipe, 15 an exhaust pipe, and 16 a turbo-charger.

The engine shown is a turbo-chargered diesel engine but, needless to say, an engine with no turbo- charger may also be employed. The fuel is fed into the injection pump 1 through the fuel pipe 3, fed into the injection nozzle 12 through the fuel pipe 6, and injected into inside of the diesel engine 11. The injection quantity is controlled by the electric governer 4, and the injection timing is controlled by timing control valve 5.

Control signals to the electric governer 4 and the timing control valve 5 are generated in the controller 7 based on signals from various sensors and injection quantity control maps (see Figs. 6 and 7) previously installed in the controller 7. The starter switch 9 is a switch for switching on a starter (not shown) for cranking the engine. When switched on, the "ON" signal is input into the controller 7.

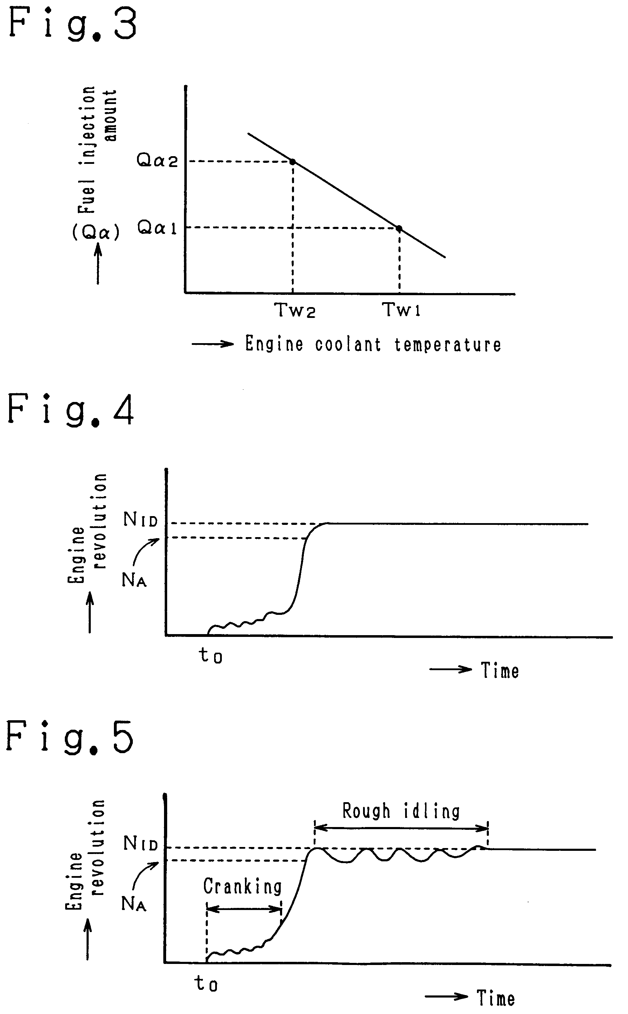

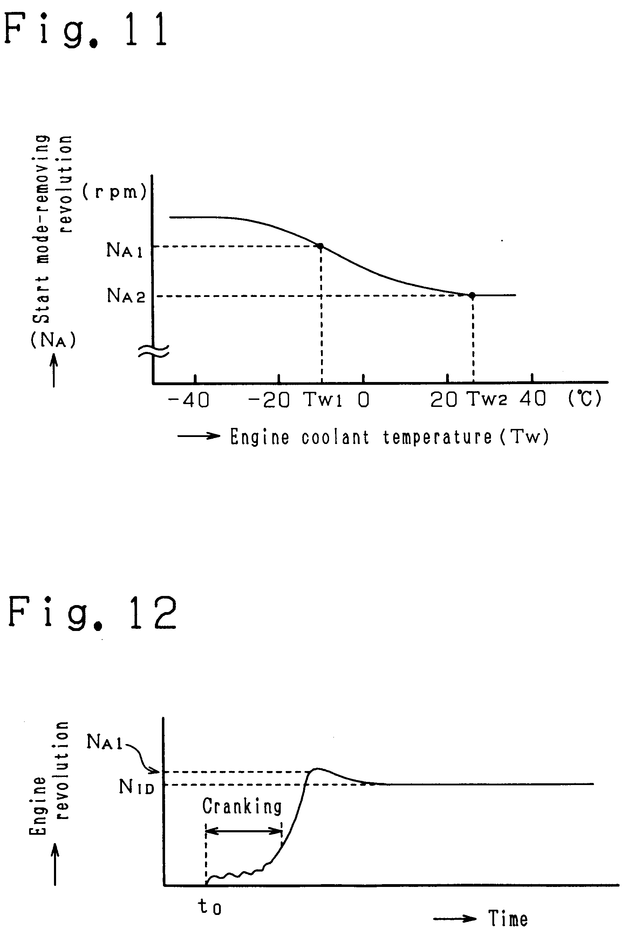

A means for correcting the fuel injection quantity so as not to cause rough idling is previously provided in the controller 7 in addition to the aforesaid fuel injection quantity control map. As such a means, a fuel injection quantity correction map as shown in Fig. 3 and a start mode-removing revolution map as shown in Fig. 11 are provided in the present invention.

### (The first example)

At first the example of using a start mode-removing revolution map is described. The fuel injection quantity correction map is a map which corrects the curve for an accelerator pedal depression of 0 % in the after-start mode fuel injection quantity control map, on the basis of the engine coolant temperature, with consideration of not causing rough idling when the mode is changed from the start mode to the after-start mode.

In Fig. 3, engine coolant temperature (T_{W} ) is plotted as abscissa, and fuel injection correction quantity (Qα) as ordinate. The lower the engine coolant temperature, the larger the fuel injection correction quantity of Qα. For example, when the engine coolant temperature is T_{W1}, the fuel injection correction quantity is Qα₁, whereas, when the temperature is T _{W2} lower than that, the fuel injection correction quantity is Qα₂. This map can be previously prepared by conducting engine-starting experiments.

A curve obtained by correcting the curve d in Fig. 7 using the fuel injection correction quantity of Qα determined from the map (specifically by adding Qα) is to be used as a curve for an accelerator pedal depression of 0 % after the mode is changed to the after-start mode.

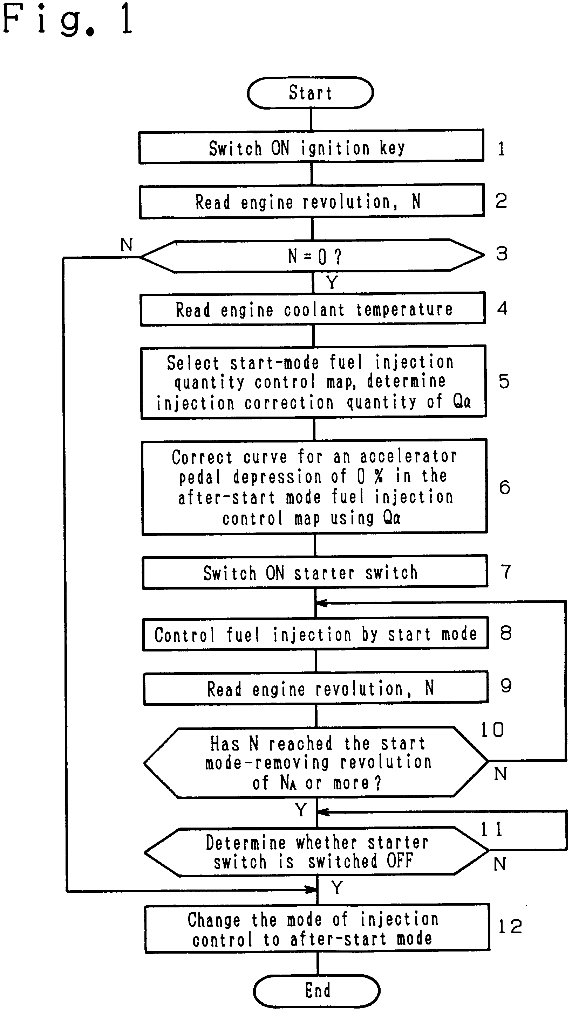

Fig. 1 is a flow chart illustrating the operation of the first example of the present invention for controlling fuel injection upon starting a diesel engine.
Step 1...An ignition key not shown is switched ON. Since energized, the controller 7 becomes under operation.
Step 2...The engine revolution detected by the engine revolution sensor 2 is read.
Step 3...The detected engine revolution of N is checked whether 0 or not. If N is not 0, it means that the engine has been started and step 12 is selected to conduct control of fuel injection according to the after-start mode fuel injection control map (Fig. 7). Since this flow chart is repeatedly given at extremely short time intervals, it may be given after the engine has been started. In such case, step 12 is selected.
Step 4...Read the engine coolant temperature (e.g., T_{W1}) detected by the engine coolant temperature sensor 10.
Step 5...A proper start-mode fuel injection quantity control curve (e.g., curve b in Fig. 6) is selected, and the fuel injection correction amount of Qα is determined (e.g., Qα₁ in Fig. 3), corresponding to the read engine coolant temperature.
Step 6...The after-start mode fuel injection quantity control curve for an accelerator pedal depression of 0 % is corrected using the thus determined fuel injection correction quantity of Qα.
Step 7...The starter switch 9 is switched ON. In other words, steps 2 to 6 are conducted during the period of from the switching-on procedure of the ignition key to the switching-on procedure of the starter switch 9.
Step 8...The fuel injection control is conducted in the start mode according to the selected start mode fuel injection quantity control map.
Step 9...The engine revolution of N is read from the engine revolution sensor 2.
Step 10...It is checked whether the engine revolution of N has reached the predetermined start mode-removing revolution of N_{A} or more. If not, return to step 8.
Step 11...When the engine revolution has reached the start mode-removing revolution of N _{A} or more, wait till the starter switch is switched off.
Step 12...When the engine revolution has reached the start mode-removing revolution of N _{A} or more and the starter switch 9 is switched off, the mode is changed to the after-start mode. Upon this mode change, the fuel injection is controlled not by curve d but by a curve for an accelerator pedal depression of 0 % obtained by correcting the curve d with the fuel injection correction quantity of Qα (curve d-2 in Fig. 9(1) (specifically by adding Qα) to be described hereinafter). Thus, there arises small changes in fuel injection quantity and in engine revolution. After the revolution has reached the idling revolution of N_{ID}, fuel injection is controlled according to the after-start mode fuel injection quantity control map (Fig. 7).

Fig. 9 is a graph illustrating the change in fuel injection quantity in accordance with the present invention upon changing the mode from the start mode to the after-start mode. Signs are the same as in Fig. 8. Fig. 9, (1) shows the case where the fuel injection correction quantity is Q α₁, and Fig. 9, (2) the case where the fuel injection correction quantity is Q α₂.

Firstly, Fig. 9, (1) is described. For the sake of convenience of describing in comparison with Fig. 8, the engine coolant temperature upon starting engine is assumed to be the same as in Fig. 8 (i.e., T _{W1}). Therefore, in Fig. 9, (1), too, the curve b in Fig. 8 is selected as the start mode fuel injection quantity control curve. Since the engine coolant temperature is T_{W1}, the fuel injection correction quantity is determined to be Qα₁ from the map in Fig. 3. Thus, curve d is corrected to curve d-2 by increasingly shifting the fuel injection quantity by Qα₁.

When the engine revolution exceeds the start mode-removing revolution of N_{A} and the starter switch 9 is switched off, the mode is changed from the start mode to the after-start mode and, at this stage, the fuel injection is controlled according to the corrected curve d-2. Thus, the working point shifts from P₁ to P₂₁, with decrease of the fuel injection quantity from Q₁ to Q₂₁.

Then, idling learning control is conducted by the controller 7, and the working point settles down to P₃₁ which gives an injection quantity of Q₃₁ capable of maintaining the idling revolution of N_{ID} without depression of an accelerator pedal.

In the above-described procedure, the change in fuel injection quantity upon mode change is Q₁ → Q₂₁, which is remarkably smaller than the change of Q₁ → Q₂ in Fig. 8 (to be exact, smaller by the fuel injection correction quantity of Qα₁). In other words, the curve for an accelerator pedal depression of 0 % is previously corrected so as to largely decrease the change, and the thus corrected curve is used upon mode change.

In addition, change in fuel injection quantity after the idling learning control is Q₂₁ → Q₃₁, which is smaller than the change of Q₂→ Q₃ in Fig. 8. Therefore, the engine revolution does not seriously vary, thus no rough idling taking place.

Fig. 9, (2) shows a case where the engine coolant temperature is T _{W2} which is lower than T_{W1}, the fuel injection correction quantity determined from the map shown in Fig. 3 is Qα₂ which is larger than Qα₁. Changes in the fuel injection quantity upon mode change and afrer the idling learning control are also smaller than in the conventional example shown in Fig. 8.

Fig. 4 is a graph showing change in engine revolution under the first example of the present invention when an engine is started according to the present invention. It is shown that, after the engine revolution reaches the start mode-removing revolution of N _{A} , the revolution settles down to the idling revolution of N_{ID} without causing rough idling.

### (The second example)

Next, the ecample of using a start mode-removing revolution map as a means so as not to cause rough idling is described. A start mode-removing revolution map is shown in Fig. 11. This map is prepared for determining the start mode-removing revolution N_{A} corresponding to the engine coolant temperature.

In Fig. 11, engine coolant temperature (T _{W} ) is plotted as abscissa, and start mode-removing revolution ( N_{A} ) as ordinate. The lower the engine coolant temperature, the higher the start mode-removing revolution of N_{A} . For example, when the engine coolant temperature is T _{W2}, the start mode-removing revolution is N _{A2}, whereas, when the temperature is T _{W1} lower than that, the start mode-removing revolution is N_{A1} higher than N_{A2}. This map can be previously prepared by conducting engine-starting experiments.

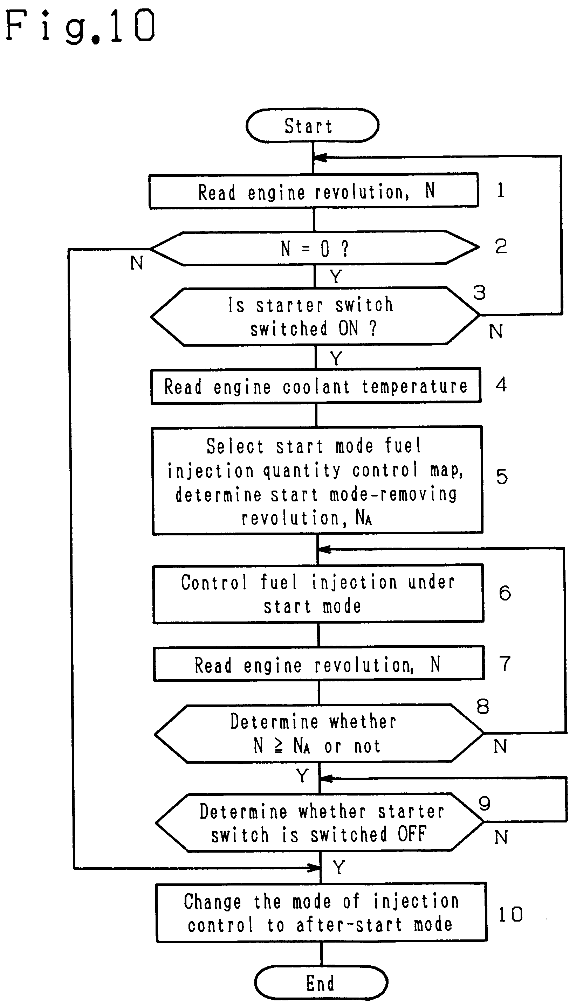

Fig. 10 is a flow chart illustrating the operation of the second example of the present invention for controlled fuel injection upon starting a diesel engine.
Step 1...When a key switch is switched ON to energize the controller 7, the engine revolution of N detected by the engine revolution sensor 2 is read.
Step 2...The detected engine revolution of N is checked whether 0 or not. If N is not 0, it means that the engine has been started and step 10 is selected to control fuel injection according to the after-start mode fuel injection control map (Fig. 7). Since this flow chart is repeatedly given at extremely short time intervals, it may be given after the engine has been started. In such case, step 10 is selected.
Step 3...When the engine is stopped, the controller waits a signal from the starter switch 10 noticing that the starter is switched ON (cranking starts).
Step 4...When the starter is switched ON, the engine coolant temperatrure at that time is read from the engine coolant sensor 10.
Step 5...A proper curve is selected in the start mode fuel injection quantity control map (for example, curve b in Fig. 6) depending upon the read engine coolant temperature, and the start mode-removing revolution of N_{A} is determined (for example, N_{A1} in Fig. 11).
Step 6...Fuel injection is controlled under the start mode according to the selected start mode fuel injection control curve.
Step 7...Read the engine revolution of N from the engine revolution number sensor 2.
Step 8...It is checked whether the engine revolution of N has reached the start mode-removing revolution of N_{A} or more. If not, return to step 6.
Step 9... After the engine revolution has reached the start mode-removing revolution of N_{A} , wait till the starter switch is swithced OFF.
Step 10...After the engine revolution has reached the start mode-removing revolution of N_{A} or more and the starter switch 9 is switched OFF, the mode is changed to the after-start mode.
   That is, fuel injection control is conducted according to the after-start mode fuel injection quantity control map (see Fig. 7). Upon this mode change, the curve is first shifted to the curve d for an accelerator pedal depression 0 %, then revolution reaching the idling revolution of N_{ID} through idling learning control, as has been described hereinbefore.

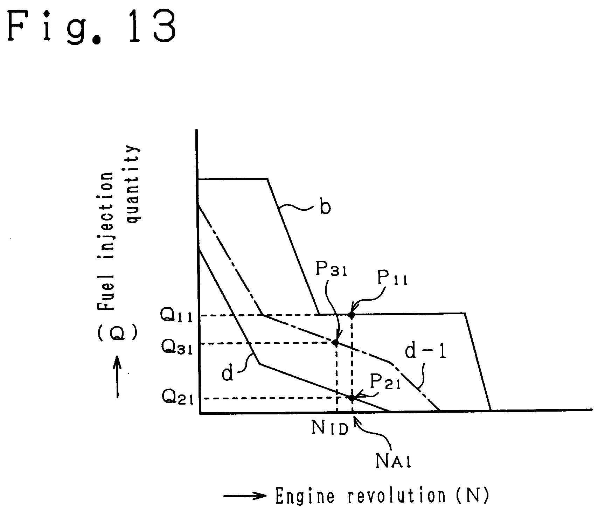

Fig. 13 is a graph illustrating the change in fuel injection quantity of the second example of the present invention upon changing the mode from the start mode to the after-start mode. Signs are the same as in Fig. 8. For the sake of convenience of describing in comparison with Fig. 8, the engine coolant temperature upon starting engine is supposed to be the same as in Fig. 8 (i.e., T_{W1}).

Therefore, in Fig. 13, too, the curve b in Fig. 8 is selected as the start mode fuel injection quantity control curve.

In Fig. 8, the start mode-removing revolution is N_{A} regardless of the engine coolant temperature whereas, in the second example of the present invention, it relates to the coolant temperature. That is, the start mode-removing revolution is determined to be N _{A1} from the start mode-removing revolution map shown in Fig. 11. This N _{A1} is assumed to be slightly higher than the idling revolution of N _{ID}.

Where the start mode control is conducted under the above-described conditions, the engine revolution reaches the start mode-removing revolution of N _{A1} when the working point reaches P₁₁ on the curve b at which the fuel injection quantity is Q₁₁. When the starter switch 9 is switched off and the mode is changed to the after-start mode, the working point migrates to P₂₁ on the curve d, the injection quantity being reduced to Q₂₁.

Then, idling learning control is conducted by the controller 7, and the working point settles down to P₃₁ which gives an injeciton quantity of Q₃₁ capable of maintaining the idling revolution of N_{ID} without depression of an accelerator pedal. The curve for an accelerator pedal depression of 0 % is corrected to curve d-1 having thereon point P₃₁.

In the above-described procedure, the change in fuel injection quantity upon mode change is Q₁₁ → Q₂₁, which is remarkably smaller than the change of Q₁ → Q₂ in Fig. 9. In other words, the start mode-removing revolution of N_{A1} is determined so that the change in fuel injection quantity is greatly reduced. Thus, the engine revolution is not seriously changed, thus rough idling not taking place.

Fig. 12 is a graph showing change in engine revolution under the second example of the present invention when an engine is started according to the present invention. It is shown that, after the engine revolution reaches the start mode-removing revolution of N _{A1}, the revolution settles down to the idling revolution of N_{ID} without causing rough idling.

Additionally, though the start mode-removing revolution determined from Fig. 11 map is assumed to be higher than the idling revolution of N _{ID} , it may be lower depending upon the engine coolant temperature.

As has been described hereinbefore, according to the start mode fuel injection-control system of the present invention for a diesel engine, the controller has an injection quantity correction map for correcting, on the basis of the engine coolant temperature upon starting, a curve for an accelerator pedal depression of 0 % in the fuel injection control map applicable after starting engine to provide the after-start mode, or a start mode-removing revolution map wherein the start mode-removing revolution is determined so as not to cause rough idling upon changing the mode from the start mode to the after-start mode, corresponding to the engine coolant temperature. Upon changing the mode from the start mode to the after-start mode, fuel injection control is corrected by such a map, thus rough idling being successfully avoided.

## Claims

1. A fuel injection control system applicable upon starting a diesel engine having an injection pump, a starter switch, an engine revolution sensor, an engine coolant temperature sensor and a controller for changing the mode of control of the fuel injection by said injection pump from a start mode to an after-start mode when the engine revolution exceeds start mode-removing level and the starter is switched off; in which said controller has a means for correcting, on the basis of the engine coolant temperature upon starting, a curve for an accelerator pedal depression of 0 % in the fuel injection control map applicable after starting engine to provide the after-start mode.

2. The fuel injection control system applicable upon starting a diesel engine as described in claim 1, wherein said controller has both an after-start mode fuel injection quantity control map for determining fuel injection quantity under the after-start mode operation and an injection quantity correction map for correcting, on the basis of the engine coolant temperature upon starting, the fuel injection quantity for an accelerator pedal depression of 0 %.

3. A fuel injection control system applicable upon starting a diesel engine having an injection pump, a starter switch, an engine revolution sensor, an engine coolant temperature sensor and a controller for changing the mode of control of the fuel injection by said injection pump from a start mode to an after-start mode when the engine revolution exceeds start mode-removing level and the starter is switched OFF; in which said controller has a means for determining said start mode-removing revolution corresponding to the engine coolant temperature upon starting the engine.

4. The fuel injection control system applicable upon starting a diesel engine as described in claim 3, wherein said controller has both an after-start mode fuel injection quantity control map for determining fuel injection quantity under the after-start mode operation and a start mode-removing revolution map for determining the start mode-removing revolution depending upon the engine coolant temperature at the start.
